# EUROPÄISCHE PATENTANMELDUNG

(11) **EP 1 721 731 A1**
(43) Veröffentlichungstag der Anmeldung: **15.11.2006**
(21) Anmeldenummer: 06006660.2
(22) Anmeldetag: 30.03.2006
(51) Int. Cl.: B32B 3/02

(54) **Laminate, Verfahren zu deren Herstellung und Verwendung**

(30) Priorität: 13.05.2005 DE 102005022166
(71) Anmelder: Celanese Emulsions GmbH, 61476 Kronberg/Ts. (DE)
(72) Erfinder: Désor, Ulrich, 65510 Idstein (DE); Prass, Werner, 55130 Mainz (DE); Reitspiess, Josef, 63951 Frankfurt (DE)
(74) Vertreter: Ackermann, Joachim

(57) **Zusammenfassung**

Beschrieben werden Laminate aus flächigem Substrat und Folie, die mit dem Substrat durch einen Klebstoff verbunden ist, der eine durch radikalische Emulsionspolymerisation hergestellte Polymerdispersion und der ein während der Polymerisation in das Polymere eingebautes und/oder durch Nachgabe zugesetztes Organosilan enthält, das neben mindestens einer Silangruppe mindestens eine primäre, sekundäre oder tertiäre Aminogruppe oder mindestens eine Epoxidgruppe aufweist oder das mindestens eine ethylenisch ungesättigte Gruppe und mindestens eine Silangruppe enthält.

Durch den Zusatz eines Organosilans lassen sich rasch verarbeitbare Laminate herstellen, die sich durch eine verbesserte Prägefestigkeit auszeichnen.

## Beschreibung

Die vorliegende Erfindung betrifft Laminate, die durch Verkleben mit ausgewählten Polymerdispersionen hergestellt wurden.

Die Verwendung von wässrigen Polymerdispersionen als Klebstoffe oder als Bindemittel in wässrigen Klebstoffzubereitungen ist dem Fachmann bekannt. Im Vergleich zu lösemittelhaltigen Klebstoffen bieten diese Polymerdispersionen den Vorteil, daß bei deren Einsatz die Emission von Lösemitteln vermieden werden kann. Da organische Lösemittel meist brennbar oder sogar leichtentzündlich sind, bieten derartige wässrige Klebstoffe außerdem einen deutlichen Sicherheitsvorteil bei der Anwendung.

Klebstoffe enthaltend Kunststoff-Dispersionen und Zusätze aus Organosilanen sind bereits bekannt. EP-A-215,518 beschreibt eine wässrige Kunststoff-Dispersion enthaltend ein Aminosilan. Die Dispersion wird als Baukleber oder Farbe mit verbesserter Naßfestigkeit eingesetzt. In der JP-A-10/178,931 werden Epoxysilanverbindungen enthaltende Dispersionsfarben beschrieben. Die damit hergestellten Beschichtungen zeigen hohe Witterungs-, Chemikalien- und Wasserbeständigkeit. US-A-2002/0037964 beschreibt ein Reaktionsprodukt von Polyisocyanaten mit ausgewählten Aminosilanen. Dieses läßt sich als Haftvermittler in Primern verwenden. US-A-4,032,487 offenbart eine Klebstoffzusammensetzung aus einem ausgewählten Acrylat-Copolymeren und einem Vernetzer enthaltend Epoxid- und Alkoxysilan-Funktionalitäten. US-A-2005/0038152 beschreibt einen Haftkleber auf der Basis einer wässrigen Dispersion, die ein mit Silanen modifiziertes Polyacrylat und eine mit dem Silan koppelnde Verbindung aufweist. Dieser Kleber läßt sich leicht von temporären Trägerfilm ablösen. Die JP-A-2002/241,725 beschreibt eine wässrige Dispersion enthaltend ein mit Silan modifiziertes Polyacrylat und daran gebundenen feinteiligen Füllstoff. Die Dispersion läßt sich als Haftkleber einsetzen. Aus JP-A-2003/321,660 ist ein weiterer Haftkleber bekannt, der eine wässrige Dispersion enthaltend ein mit Silan modifiziertes Polyacrylat sowie ein Aminosilan aufweist.

Es wurden auch bereits Laminate beschrieben, bei deren Herstellung Klebstoffe enthaltend Kunststoffkomponenten und Zusätze aus Organosilanen eingesetzt worden sind. US-A-2004/0092689 beschreibt ein ausgewähltes Acrylharz, das vorzugsweise ein Silan enthält und zur Herstellung von Laminaten für optische Einsatzgebiete, beispielsweise zur Herstellung von LCD-Anzeigen, eingesetzt wird. Aus der EP-A-1,283,232 ist ein Zweikomponentenkleber für die Herstellung von Laminaten bekannt, der eine Polyisocyanat und Silankoppler enthaltende Härterkomponente und eine Polyol enthaltende Basiskomponente aufweist. JP-A-11/245,346 offenbart einen laminierten Film für Verpackungen. Dieser besteht aus zwei Folien mit nicht saugfähigen Oberflächen, nämlich einer Polyvinylidenfolie, die auf eine Trägerfolie laminiert ist. Als Klebstoff wird eine wässrige Dispersion eines Polyester-Polyurethanharzes verwendet, dem ein Silan-haftvermittler zugesetzt worden ist. Aus JP-A-09/125,039 ist ein Klebestoff für Holz-Metall-Laminate bekannt. Dieser enthält ein wasserlösliches Polymer oder eine wässrige Polymerdispersion und einen Füllstoff und einen Isocyanat-Vernetzer sowie einen Silan-Kopplungsagenz. Die beschriebenen Holz-Metall-Laminate sind nicht prägbar.

Aus der DE 198 38 667 A1 ist die Verwendung ausgewählter wässriger Polyacrylatdispersionen als Kaschierklebstoffe bekannt. Bei der Herstellung der Dispersionen können Regler eingesetzt werden. Als Beispiel dafür wird unter anderem Mercaptopropyltrimethoxysilan genannt.

Bei der Herstellung von Laminaten werden eine Vielzahl von unterschiedlichen Anforderungen an den Kaschierklebstoff gestellt. So wird gewünscht, dass die Kaschierklebstoffe für die Verklebung von unterschiedlichen Materialien, wie Polymerfolien, Metallfolien oder metallisierten Polymerfolien mit Papier und beschichtetem Papier und Karton eignen. Die Kaschierklebstoffe sollen zu allen diesen Substraten eine gute Haftung aufweisen und möglichst kurze Zeit nach der Kaschierung eine hohe und dauerhafte Festigkeit des Verbundes bewirken. Des weiteren wird von den Klebstoffen eine problemlose Verarbeitung auch auf schnell laufenden Maschinen erwartet, was bereits für die als Bindemittel eingesetzte Dispersion eine hohe Scherstabilität und eine gute Fließeigenschaften voraussetzt.

Bei der Glanzfolienkaschierung als Spezialfall wird eine transparente Polymerfolie zunächst mit dem flüssigen Klebstoff beschichtet. Der Klebstoff wird getrocknet, und anschließend die mit dem Klebstoff beschichtete Folie unter Wärme und Druck auf das Substrat, meist ein bedruckter Papier oder ein bedruckter Karton, laminiert. Das so hergestellte Laminat wird häufig relativ bald nach der Kaschierung weiterverarbeitet und dabei geprägt, gefalzt oder genutet. Bei der dabei auftretenden Verformung des Laminats darf es zu keinerlei Ablösungen der Folie vom Substrat kommen. Um derartige Ablösungen zu vermeiden wird die Klebeschicht in der Regel vernetzt. Dies kann durch Einbau eines chemischen Vernetzungssystems in die Dispersion, wie in EP-A-148,386 oder EP-A-644,902 beschrieben, oder durch Zusatz von wasserlöslichen Isocyanat-Härtern oder auch durch Einbau UV-vemetzender Gruppen, wie in DE-A-101 35 379 beschrieben, geschehen.

Aufgrund der Tatsache, dass chemisch vernetzende Klebstoffe zum Aushärten Zeit benötigen, ist bei diesen Systemen eine gewisse Lagerdauer abzuwarten, bevor die Kaschierungen weiterverarbeitet werden können. Dieser Nachteil kann durch Verwendung von UV-härtenden Klebstoffen abgemildert werden. Bei diesen Systemen ist jedoch eine zusätzliche Bestrahlungsstation in der Kaschieranlage notwendig und es gibt Beschränkungen hinsichtlich der verwendbaren Folien, denn matte oder für UV-Licht nicht transparente Folien können nicht verwendet werden.

Ausgehend von diesem Stand der Technik bestand die Aufgabe der Erfindung in der Bereitstellung eines Laminats, das ohne Einbau von Zusatzgeräten in die Kaschieranlage kurz nach der Kaschierung eine erhöhte Prägefestigkeit aufweist, ohne dass dabei die anderen Eigenschaften des Laminats negativ beeinflußt werden.

Es wurde jetzt gefunden, daß sich Klebstoffe enthaltend wässrige Polymerdispersionen durch den Zusatz von Organosilanen zur Herstellung von kaschierten Verbunden einsetzen lassen, die eine verbesserte Prägbarkeit zeigen.

Die vorliegende Verbindung betrifft prägbare Laminate umfassend
a) ein flächiges Substrat mit mindestens einer saugfähigen Oberfläche,
b) eine Folie, die
c) mit dem Substrat durch einen Klebstoff verbunden ist, der eine durch radikalische Emulsionspolymerisation hergestellte Polymerdispersion und ein und ein während der Polymerisation in das Polymere eingebautes und/oder durch Nachgabe zugesetztes Organosilan enthält, das neben mindestens einer Silangruppe mindestens eine primäre, sekundäre oder tertiäre Aminogruppe oder mindestens eine Epoxidgruppe aufweist oder das mindestens eine ethylenisch ungesättigte Gruppe und mindestens eine Silangruppen enthält.

Die erfindungsgemäßen Laminate müssen prägbar sein, d.h. sie müssen durch geeignete Behandlung ausgewählter Teile der Oberfläche mit Druck strukturierbar sein. Die erfindungsgemäßen Laminate müssen nicht notwendigerweise durch Prägen strukturiert worden sein. Bevorzugt weisen diese Laminate jedoch mindestens eine geprägte Oberfläche auf.

Zur Herstellung der erfindungsgemäßen Laminate werden flächige Substrate mit mindestens einer saugfähigen Oberfläche eingesetzt. Im Rahmen dieser Beschreibung sind hierunter flexible und starre Substrate zu verstehen, die aus Papier, Karton oder auch anderen Faserwerkstoffen, z.B. Vliese aus Glas, Kunststoff- oder Naturfasern, bestehen. Die Substrate können aus einem oder mehreren Materialien bestehen oder selbst Laminate sein, beispielsweise Kunststofflaminate mit mindestens einer saugfähigen Oberfläche, die gegebenenfalls gedruckte Schaltungen aufweisen können.

Besonderes bevorzugt werden flächige und gleichzeitig flexible Substrate mit saugfähigen Oberflächen eingesetzt. Beispiele dafür sind Papiere einschließlich Pappe und Kartons sowie andere Faservliese. Diese Materialien können auch bedruckt und/oder beschichtet sein.

Zur Herstellung der erfindungsgemäßen Laminate lassen sich beliebige Folien einsetzen.

Diese können wie die Substrate aus unterschiedlichsten Materialien bestehen, beispielsweise aus Kunststoffen, Metallen, Furnier oder aus Papier.

Folien aus Metallen oder Kunststoffen werden bevorzugt, insbesondere transparente Kunststofffolien.

Beispiele für bevorzugt eingesetzte Metallfolien sind Folien aus Aluminium.

Beispiele für bevorzugt eingesetzte Kunststofffolien sind Folien aus Polyethylen (PE), Polypropylen (PP), insbesondere aus orientiertem Polypropylen (OPP), Polystyrol (PS), Celluloseacetat (CA), Polyvinylchlorid (PVC), Polyamid (PA) und Polyethylenterephthalat (PET).

Beispiele für besonders bevorzugt eingesetzte transparente Kunststofffolien sind Folien aus orientiertem Polypropylen (monoaxial oder biaxial orientiert) oder aus Celluloseacetat.

Besonders bevorzugt werden Laminate bei denen die Substratoberfläche bedruckt ist und die Kunststofffolie transparent ist.

Ein weiteres bevorzugtes Laminat weist auf der Seite der Folie eine Prägung auf.

Die erfindungsgemäß eingesetzten Klebstoffe enthalten Polymerdispersionen, die durch radikalische Emulsionspolymerisation ethylenisch ungesättigter Monomerer hergestellt worden sind. Derartige Klebstoffe sind an sich bekannt.

Die Auswahl der zur Herstellung der Polymerdispersionen geeigneten ethylenisch ungesättigten Monomere ist an sich nicht kritisch. Es kommen alle üblicherweise zur Herstellung von Polymerdispersionen verwendeten Monomeren in Frage, die in sinnvoller Weise den Anforderungen der Praxis entsprechend miteinander kombiniert werden können.

Bevorzugt sind als Hauptmonomere Vinylester von Carbonsäuren mit 1 bis 18 Kohlenstoffatomen, Ester bzw. Halbester ethylenisch ungesättigter C₃-C₈-Mono- und Dicarbonsäuren mit C₁-C₁₈-Alkanolen, aromatische oder aliphatische ethylenisch ungesättigte, gegebenenfalls halogen-substituierte Kohlenwasserstoffe.

Als Vinylester von Carbonsäuren mit 1 bis 18 Kohlenstoffatomen können alle dem Fachmann bekannten Monomere eingesetzt werden. Besonders bevorzugt sind jedoch Vinylester von Carbonsäuren mit 1 bis 4 Kohlenstoffatomen, wie zum Beispiel Vinylformiat, Vinylacetat, Vinylpropionat, Vinylisobutyrat, Vinylpivalat und Vinyl-2-ethylhexanoat; Vinylester von gesättigten, verzweigten Monocarbonsäuren mit 9, 10 oder 11 Kohlenstoffatomen im Säurerest (®Versaticsäuren); Vinylester von längerkettigen, gesättigten und ungesättigten Fettsäuren, beispielsweise Vinylester von Fettsäuren mit 8 bis 18 Kohlenstoffatomen, wie zum Beispiel Vinyllaurat und Vinylstearat; Vinylester der Benzoesäure oder der p-tert.-Butylbenzoesäure sowie Gemische derselben, wie zum Beispiel Gemische aus Vinylacetat und einer Versaticsäure oder aus Vinylacetat und Vinyllaurat. Insbesondere bevorzugt ist Vinylacetat.

Als Ester bzw. Halbester ethylenisch ungesättigter C₃-C₈-Mono- und Dicarbonsäuren mit C₁-C₁₈-Alkanolen können alle dem Fachmann bekannten Monomere eingesetzt werden. Dabei werden die Ester bzw. Halbester ethylenisch ungesättigter C₃-C₈₋Mono- und Dicarbonsäuren mit C₁-C₁₂-Alkanolen bevorzugt, wobei C₁-C₈-Alkanolen oder C₅-C₈-Cycloalkanolen besonders bevorzugt sind. Geeignete C₁-C₁₈-Alkanole sind beispielsweise Methanol, Ethanol, n-Propanol, i-Propanol, 1-Butanol, 2-Butanol, i-Butanol, tert.-Butanol, n-Hexanol, 2-Ethylhexanol, Laurylalkohol und Stearylalkohol. Geeignete Cycloalkanole sind beispielsweise Cyclopentanol und Cyclohexanol.

Besonders bevorzugt sind die Ester der Acrylsäure, der Methacrylsäure, der Crotonsäure, der Maleinsäure, der Itaconsäure, der Citraconsäure und der Fumarsäure. Insbesondere bevorzugt sind die Ester der Acrylsäure und/oder der Methacrylsäure, wie z. B. (Meth)acrylsäuremethylester, (Meth)acrylsäureethylester, (Meth)acrylsäureisopropylester, (Meth)acrylsäure-n-butylester, (Meth)acrylsäure-isobutylester, (Meth)acrylsäure-1-hexylester, (Meth)acrylsäure-tert.-butylester, (Meth)acrylsäure-2-ethylhexylester, sowie die Ester der Fumarsäure und der Maleinsäure, wie z.B. der Fumarsäuredimethylester, der Maleinsäuredimethylester, der Maleinsäuredi-n-butylester, der Maleinsäuredi-n-octylester und der Maleinsäuredi-2-ethylhexylester. Gegebenenfalls können die genannten Ester auch mit Epoxy- und/oder Hydroxylgruppen substituiert sein.

Beispiele für aromatische oder aliphatische ethylenisch ungesättigte, gegebenenfalls halogensubstituierte Kohlenwasserstoffe sind Ethen, Propen, 1-Buten, 2-Buten, Isobuten, Styrol, Vinyltoluol, Vinylchlorid und Vinylidenchlorid, wobei Ethen und Styrol bevorzugt sind.

Neben diesen Hauptmonomeren können funktionelle Monomere eingesetzt werden. Dazu zählen ionische Monomere und nichtionische Monomere mit funktionellen Gruppen.

Zu den ionischen Monomeren zählen solche Verbindungen, die mindestens eine Carbonsäure-, eine Sulfonsäure-, eine Phosphorsäure- oder eine Phosphonsäuregruppe in direkter Nachbarschaft zur Doppelbindungseinheit tragen oder aber über einen Spacer mit dieser verbunden sind. Als Beispiele seien genannt: ethylenisch ungesättigte C₃-C₈-Monocarbonsäuren, ethylenisch ungesättigte C₅-C₈-Dicarbonsäuren sowie deren Anhydride, und Halbester von ethylenisch ungesättigten C₄-C₈₋Dicarbonsäuren.

Bevorzugt sind ungesättigte Monocarbonsäuren, wie Acrylsäure und Methacrylsäure sowie deren Anhydride; ungesättigte Dicarbonsäuren, wie Maleinsäure, Fumarsäure, Itaconsäure und Citraconsäure sowie deren Halbester mit C₁-C₁₂-Alkanolen, wie zum Beispiel Monomethylmaleinat und Mono-n-butylmaleinat. Weitere bevorzugte, ethylenisch ungesättigte, ionische Monomere sind ethylenisch ungesättigte Sulfonsäuren wie Vinylsulfonsäure, 2-Acrylamido-2-methylpropansulfonsäure, 2-Acryloxyethansulfonsäure und 2-Methacryloxyethansulfonsäure, 3-Acryloxy- und 3-Methacryloxypropansulfonsäure, Vinylbenzolsulfonsäure, sowie ethylenisch ungesättigte Phosphonsäuren, wie Vinylphosphonsäure.

Außerdem können neben den genannten Säuren auch deren Salze eingesetzt werden, vorzugsweise deren Alkalimetall- oder Ammoniumsalze und besonders bevorzugt deren Natriumsalze, wie beispielsweise die Natriumsalze der Vinylsulfonsäure und der 2-Acrylamidopropansulfonsäure.

Weiter eignen sich als ethylenisch ungesättigte, ionische Monomere auch Monomere mit kationischer Funktionalität, wie beispielsweise auf quaternäre Ammoniumgruppen zurückgehende Monomere. Bevorzugt sind jedoch anionische Monomere.

Zu den ethylenisch ungesättigten, nichtionischen funktionellen Monomeren zählen beispielsweise die Amide der im Zusammenhang mit den ethylenisch ungesättigten, ionischen Monomeren genannten Carbonsäuren, wie beispielsweise (Meth)acrylamid und Acrylamid, sowie wasserlösliche N-Vinyllactame, wie beispielsweise N-Vinylpyrrolidon, als auch solche Verbindungen, die als ethylenisch ungesättigte Verbindungen kovalent gebundene Polyethylenglykoleinheiten enthalten, wie beispielsweise Polyethylenglykolmono- oder diallylether oder die Ester ethylenisch ungesättigter Carbonsäuren mit Polyalkylenglykolen.

Weiterhin kommen als weitere ethylenisch ungesättigte, nichtionische funktionelle Monomere Nitrile ethylenisch ungesättigter C₃-C₈-Carbonsäuren in Frage, wie Acrylnitril und Methacrylnitril, sowie haftungsverbessernde und vernetzende Monomere. Auch können C₄-C₈-konjugierte Diene, wie 1,3-Butadien, Isopren und Chloropren als Monomere eingesetzt werden.

Zu den haftungsverbessernden Monomeren gehören sowohl Verbindungen, die eine an das Doppelbindungssystem kovalent gebundene Acetoacetoxy-Einheit aufweisen, als auch Verbindungen mit kovalent gebundenen Harnstoffgruppen. Zu den erstgenannten Verbindungen zählen insbesondere Acetoacetoxyethyl-(meth)acrylat und Acetessigsäureallylester. Zu den harnstoffgruppenhaltigen Verbindungen gehören zum Beispiel N-Vinyl- und N-Allyl-Harnstoff sowie Derivate des Imidazolidin-2-ons, wie N-Vinyl- und N-Allyl-imidazolidin-2-on, N-Vinyloxyethylimidazolidin-2-on, N-(2-(Meth)acrylamidoethyl)-imidazolidin-2-on, N-(2-(Meth)acryloxyethyl)imidazolidin-2-on, N-(2-(Meth)acryloxy-acetamidoethyl)imidazolidin-2-on, sowie weitere dem Fachmann bekannte Haftungsvermittler auf Basis von Harnstoff oder Imidazolidin-2-on. Zur Verbesserung der Haftung eignet sich auch Diacetonacrylamid in Kombination mit einer Nachgabe von Adipinsäuredihydrazid zur Dispersion.

Als vernetzende Monomere können sowohl bifunktionelle als auch polyfunktionelle Monomere eingesetzt werden. Beispiele hierfür sind Diallylphthalat, Diallylmaleinat, Triallylcyanurat, Tetraallyloxyethan, Divinylbenzol, Butandiol-1,4-di(meth)acrylat, Triethylenglykoldi(meth)acrylat, Divinyladipat, Allyl(meth)acrylat, Vinylcrotonat, Methylenbisacrylamid, Hexandioldiacrylat, Pentaerythroldiacrylat und Trimethylolpropantriacrylat.

Die funktionellen Monomere können gegebenenfalls in Mengen von 0,1 bis 25 Gew.-%, vorzugsweise von 0,5 bis 10 Gew.-%, bezogen auf die Gesamtmenge der Monomere, eingesetzt werden. Wobei die vernetzenden Monomere gegebenenfalls in Mengen von 0,02 bis 5 Gew.-%, vorzugsweise von 0,02 bis 1 Gew.-%, bezogen auf die Gesamtmenge der Monomere, eingesetzt werden.

Bei der Auswahl der geeigneten Monomeren oder Monomerkombinationen sind die allgemein anerkannten Gesichtspunkte zur Herstellung von Dispersionen zu berücksichtigen, die zur Herstellung von Klebstoffen eingesetzt werden. So ist insbesondere darauf zu achten, daß Polymere entstehen, die unter den vorgesehenen Trocknungsbedingungen der Beschichtung einen Klebfilm bilden, und daß die Auswahl der Monomeren zur Herstellung von Copolymerisaten so zu treffen ist, daß nach der Lage der Polymerisationsparameter die Bildung von Copolymeren zu erwarten ist.

Bevorzugt werden von Acrylaten, Methacrylaten und/oder Vinylestern aliphatischer Carbonsäuren abgeleitete Polymerdispersionen verwendet.

Bevorzugte Monomergemische aus den Monomeren zur Herstellung von Poly-(meth)acrylaten gegebenenfalls zusammen mit Vinylestern sind Vinylacetat/Butylacrylat, Vinylacetat/Dibutylmaleinat, Vinylacetat/Dibutylfumarat, Vinylacetat/2-Ethylhexylacrylat, Vinylacetat/Ethen/-Butylacrylat, Vinylacetat/Ethen/Dibutylmaleinat, Vinylacetat/Ethen/Dibutylfumarat, Vinylacetat/Ethen/2-Ethylhexylacrylat, Methylmethacrylat/Butylacrylat, Methylmethacrylat/2-Ethylhexylacrylat, Styrol/Butylacrylat, Styrol/2-Ethylhexylacrylat, Methylmethacrylat/Isobutylacrylat, Methylmethacrylat/Isopropylacrylat.

Weitere bevorzugte Monomergemische aus den Monomeren zur Herstellung von Polyvinylesters gegebenenfalls zusammen mit weiteren funktionellen Monomeren sind Vinylacetawinylchlorid/Ethen, Vinylacetat/Vinyllaurat/Ethen, Vinylacetat/Vinyllaurat/Ethen/Vinylchlorid, Vinylacetat/Versaticsäurevinylester/-EthenNinylchlorid, Versaticsäurevinylester/EthenNinylchlorid, Vinylacetat/-Versaticsäurevinylester/Ethen und Vinylacetat/Ethen, wobei die Kombination Vinylacetat/Ethen besonders bevorzugt ist.

Besonders bevorzugt wird als Klebstoff eine radikalische Emulsionspolymerisation hergestellte Polymerdispersion eingesetzt, die ein von Acrylat und/oder Methacrylat als Hauptmonomer abgeleitetes Homo- oder Copolymer ("Polyacrylat") oder ein von Vinylester als Hauptmonomer abgeleitetes Homo- oder Copolymer ("Polyvinylester") ist, vorzugsweise ein Polyacrylat oder ein Polyvinylester mit einer Glasübergangstemperatur unterhalb von 15 °C. Die Glasübergangstemperatur des Polymeren kann durch geeignete Auswahl der Monomerkombinationen vom Fachmann eingestellt werden.

Die erfindungsgemäß eingesetzte Dispersion ist durch Schutzkolloide und/oder durch Emulgatoren stabilisiert.

Bei den Schutzkolloiden handelt es sich um polymere Verbindungen, beispielsweise mit Molekulargewichten von größer als 2000 g/mol, wohingegen es sich bei den Emulgatoren um niedermolekulare Verbindungen handelt, deren relative Molekulargewichte beispielsweise unter 2000 g/mol liegen. Diese Verbindungen sind bereits bei der Polymerisation zugegen und können gegebenenfalls auch nach der Polymerisation noch nachgegeben werden.

Beispiele für Schutzkolloide sind Stärke, Gummi Arabicum, Alginate oder Traganth, Methyl-, Ethyl-, Hydroxyethyl- oder Carboxymethylcellulose oder mittels gesättigter Säuren oder Epoxiden modifizierte Stärke sowie synthetische Substanzen wie Polyvinylalkohol (mit oder ohne Restacetylgehalt) oder teilweise veresterter oder acetalisierter oder mit gesättigten Resten veretherter Polyvinylalkohol, sowie Polypeptide, wie Gelatine, aber auch Polyvinylpyrrolidon, Polyvinylmethylacetamid oder Poly(meth-)acrylsäure. Bevorzugt wird Polyvinylalkohol.

Der Gewichtsanteil derartiger gegebenenfalls anwesender Schutzkolloide, bezogen auf die Gesamtmenge der zur Herstellung eingesetzten Monomeren, beträgt üblicherweise bis zu 15 %.

Darüber hinaus kann es in vielen Fällen vorteilhaft sein, bei der Herstellung der Dispersionen, zusätzlich zu den Schutzkolloiden oder anstelle von Schutzkolloiden nichtionische und/oder ionische Emulgatoren zu verwenden.

Geeignete nichtionische Emulgatoren sind araliphatische und aliphatische nichtionische Emulgatoren, wie zum Beispiel ethoxylierte Mono-, Di- und Trialkylphenole (EO-Grad: 3 bis 50, Alkylrest C₄ bis C₉), Ethoxylate langkettiger Alkohole (EO-Grad: 3 bis 50, Alkylrest: C₈ bis C₃₆), sowie Polyethylenoxid/-Polypropylenoxid-Blockcopolymere. Bevorzugt werden Ethoxylate langkettiger Alkanole (Alkylrest: C₁₀ bis C₂₂, mittlerer Ethoxylierungsgrad: 3 bis 50), und darunter besonders bevorzugt solche auf Basis von nativen Alkoholen, Guerbet-Alkoholen oder Oxoalkoholen mit einem linearen oder verzweigten C₁₂-C₁₈-Alkylrest und einem Ethoxylierungsgrad von 8 bis 50, eingesetzt.

Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208.

Als ionische Emulgatoren kommen sowohl anionische als auch kationische in Betracht.

Zu den anionischen Emulgatoren zählen Alkali- und Ammoniumsalze von Alkylsulfaten (Alkylrest: C₈ bis C₁₈), Alkylphosphonaten (Alkylrest: C₈ bis C₁₈), von Schwefelsäurehalbestern oder Phosphorsäuremono- und diestern ethoxylierter Alkanole (EO-Grad: 2 bis 50, Alkylrest: C₈ bis C₂₂) und ethoxylierter Alkylphenole (EO-Grad: 3 bis 50, Alkylrest: C₄ bis C₉), von Alkylsulfonsäuren (Alkylrest: C₁₂ bis C₁₈), von Alkylarylsulfonsäuren (Alkylrest: C₉ bis C₁₈), von Sulfobernsteinsäurehalbestern und Sulfobernsteinsäurediestern von Alkanolen (Alkylrest: C₈ bis C₂₂) und ethoxylierten Alkanolen (EO-Grad: 2 bis 50, Alkylrest: C₈ bis C₂₂), sowie nichtethoxylierter und ethoxylierter Alkylphenole (EO-Grad: 3 bis 50, Alkylrest: C₄ bis C₉). In der Regel werden die aufgeführten Emulgatoren als technische Gemische eingesetzt, wobei sich die Angaben zu Länge von Alkylrest und EO-Kette auf das jeweilige Maximum der in den Mischungen vorkommenden Verteilungen bezieht. Beispiele aus den genannten Emulgatorklassen sind ® Texapon K12 (Natriumlaurylsulfat der Firma Cognis), ® Emulsogen EP (C₁₃-C₁₇-Alkylsulfonat der Firma Clariant), ®Maranil A 25 IS (Natrium-n-alkyl-(C₁₀-C₁₃) benzolsulfonat der Firma Cognis), ®Genapol liquid ZRO (Natrium C₁₂/C₁₄-Alkylethersulfat mit 3 EO-Einheiten der Firma Clariant), ® Hostapal BVQ-4 (Natriumsalz eines Nonylphenolethersulfats mit 4 EO-Einheiten der Firma Clariant), Aerosol MA 80 (Natriumdihexylsulfosuccinat der Firma Cytec Industries), Aerosol A-268 (Dinatriumisodecylsulfosuccinat von Cytec Industries) und Aerosol A-103 (Dinatriumsalz eines Halbesters der Sulfobernsteinsäure mit einem ethoxylierten Nonylphenol der Firma Cytec Industries).

Zu den kationischen Emulgatoren zählen beispielsweise Alkylammoniumacetate (Alkylrest: C₈ bis C₁₂), quartäre, ammoniumgruppenhaltige Verbindungen und Pyridiniumverbindungen.

Selbstverständlich ist bei der Wahl der ionischen Emulgatoren darauf zu achten, dass Unverträglichkeiten in der resultierenden Kunststoff-Dispersion, die bis zur Koagulation führen können, auszuschließen sind. Deshalb werden bevorzugt anionische Emulgatoren in Kombination mit anionischen Monomeren oder kationische Emulgatoren in Kombination mit kationischen Monomeren eingesetzt, wobei die Kombinationen aus anionischen Emulgatoren und anionischen Monomeren besonders bevorzugt sind.

Die Mengen der gegebenenfalls eingesetzten Emulgatoren liegen in den üblicherweise einzuhaltenden Grenzen. Insgesamt werden daher bis zu etwa 10 Gew.-%, vorzugsweise bis zu 5 Gew.-%, bezogen auf die Gesamtmenge der zur Herstellung der Dispersionen eingesetzten Monomere, verwendet. In der Regel werden dabei Mischungen aus ionischen und nichtionischen Emulgatoren eingesetzt, es können jedoch auch ionische und nichtionische Emulgatoren alleine zur zusätzlichen Stabilisierung der Dispersionen eingesetzt werden.

Die erfindungsgemäß eingesetzten wässrigen Polymerdispersionen besitzen typischerweise Feststoffgehalte von 20 bis 70 Gew.-%, vorzugsweise 30 bis 65 Gew.%, und besonders bevorzugt 40 bis 60 Gew.-%.

Gegebenenfalls enthalten die erfindungsgemäß eingesetzten Polymerdispersionen noch weitere an sich übliche Zusätze.

Als Additive und weitere Bestandteile können Filmbildehilfsmittel, wie Testbenzin, Texanol® , TxiB® , Butylglykol, Butyldiglykol, Butyldipropylenglykol und Butyltripropylenglykol; Weichmacher, wie Dimethylphthalat, Disobutylphthalat, Adipinsäurediisobutylester, Coasol B® und Plastilit 3060® ; Netzmittel, wie AMP 90® , TegoWet.280®, Fluowet PE®; Verdicker, wie Polyacrylate oder Polyurethane, wie Borchigel L75® und Tafigel PUR 60® ; Entschäumer, z.B. Mineralöl- oder Silikonentschäumer; UV-Schutzmittel, wie Tinuvin 1130® , nachträglich zugesetzte stabilisierende Emulgatoren oder Polymere, wie Polyvinylalkohol oder Celluloseether, die Rheologie modifizierende Hilfsmittel z.B. Polyacrylat- oder Polyurethan-Verdicker, und andere Additive und Hilfsmittel, wie sie zur Formulierung von Klebstoffen üblich sind, verwendet werden.

Die minimale Filmbildetemperatur der erfindungsgemäß eingesetzten Klebstoffe liegt typischerweise unter 25 °C, vorzugsweise unter 15 °C. Die Filmbildetemperatur kann durch Zusatz an sich bekannter Koaleszenzmittel modifziert und gezielt eingestellt werden.

Die erfindungsgemäß eingesetzte Polymerdispersion wird durch radikalische Emulsionspolymerisation hergestellt. Dieses kann im Batchverfahren, im Zulaufverfahren, im kombinierten Batch/Zulauf-Verfahren oder im kontinuierlichen Verfahren durchgeführt werden.

Vorzugsweise wird jedoch im kombinierten Batch/Zulauf-Verfahren oder besonders bevorzugt, im Zulaufverfahren gearbeitet, wobei üblicherweise ein Teil der Monomeren (1 bis 15 Gew. %) zum Starten der Polymerisation vorgelegt werden. Die Dosierung der Monomere kann entweder zusammen oder in getrennten Zuläufen erfolgen. Weiterhin kann es vorteilhaft sein, in bestimmten Ausführungsformen zur Einstellung spezifischer Partikelgrößen- und -verteilungen eine Saatpolymerisation durchzuführen.

Als radikalische Initiatoren werden beispielsweise verwendet: Wasserstoffperoxid, Benzoylperoxid, Cyclohexanonperoxid, Isopropylcumylhydroperoxid, Persulfate des Kaliums, Natriums und Ammoniums, Peroxide von geradzahligen gesättigten einwertigen aliphatischen Carbonsäuren der Kettenlänge C₈-C₁₂, Tertiärbutylhydroperoxid, Ditertiärbutylperoxid, Diisopropylpercarbonat, Azoisobuttersäuredinitril, Acetylcyclohexansulfonylperoxid, Tertiärbutylperbenzoat, Tertiärbutylperoctoat, Bis-(3,5,5-trimethyl)-hexanoylperoxid, Tertiärbutylperpivalat, Hydroperoxypinan, p-Menthanhydroperoxid. Die vorgenannten Verbindungen können auch innerhalb eines Redoxsysteme verwendet werden, wobei Übergangsmetallsalze wie Eisen-IIsalze oder andere Reduktionsmittel mitverwendet werden. Als Reduktionsmittel bzw. Regler können Alkalisalze der Oxymethansulfinsäure, Mercaptane der Kettenlänge C₁₀-C₁₄, Buten-(1)-ol-(3), Hydroxylaminsalze, Natriumdialkyldithiocarbamat, Natriumbisulfit, Ammoniumbisulfit, Natriumdithionit, Diisopropylxanthogendisulfid, Ascorbinsäure, Weinsäure, Isoascorbinsäure, Borsäure, Harnstoff und Ameisensäure mitverwendet werden.

Vorzugsweise werden jedoch wasserlösliche Persulfate, insbesondere Ammoniumpersulfat oder Natriumpersulfat zum Starten der Polymerisation verwendet.

Zur Stabilisierung verwendetes Schutzkolloid und/oder Emulgator kann ebenfalls entweder zu Beginn der Polymerisation komplett vorgelegt oder partiell vorgelegt und partiell dosiert oder komplett während der Polymerisation zudosiert werden.

Der pH-Wert der Dispersion liegt typischerweise zwischen 2 und 7, vorzugsweise zwischen 2,5 und 6.

Die Polymerisationstemperatur bewegt sich typischerweise im Bereich von 20 bis 120°C, vorzugsweise im Bereich von 30 bis 110°C und ganz besonders bevorzugt im Bereich von 45 bis 95°C.

Nach Abschluss der Polymerisation kann zur Entmonomerisierung eine weitere, vorzugsweise chemische Nachbehandlung, insbesondere mit Redoxkatalysatoren, wie zum Beispiel Kombinationen aus den obengenannten Oxidationsmitteln und Reduktionsmitteln angeschlossen werden. Weiterhin kann in bekannter Weise beispielsweise durch physikalische Entmonomerisierung, d. h. destillative Entfernung (insbesondere über Wasserdampfdestillation) oder durch Strippen mit einem Inertgas, vorhandenes Restmonomer entfernt werden. Besonders effizient ist eine Kombination aus physikalischen und chemischen Methoden, die eine Absenkung der Restmonomere auf sehr niedrige Gehalte (< 1000 ppm, vorzugsweise < 100 ppm) gestattet.

Die Menge des Polymeren im erfindungsgemäß eingesetztem Klebstoff beträgt typischerweise 50 bis 99,9 Gew. %, vorzugsweise 80 bis 99,8 Gew. %, bezogen auf den Feststoffgehalt des Klebstoffs.

Der erfindungsgemäß eingesetzte Klebstoff enthält mindestens ein Organosilan. Dieses kann bereits bei der Herstellung der Polymerdispersion anwesend sein und/oder durch Nachgabe zugesetzt werden. Die Menge an Organosilan-Verbindung beträgt typischerweise 0,05 bis 20 Gew.%, vorzugsweise 0,05 bis 5 Gew.%, bezogen auf den Feststoffgehalt des Klebstoffs.

Es können beliebige Organosilane eingesetzt werden, die neben mindestens einer Silangruppe mindestens eine primäre, sekundäre oder tertiäre Aminogruppe oder mindestens eine Epoxidgruppe aufweisen oder die ethylenisch ungesättigte Gruppen und Silangruppen enthalten. Es sind sowohl Verbindungen möglich, die während der Polymerisation in das Polymere eingebaut werden oder die neben dem Polymeren als separate Komponente in der Dispersion vorliegen.

Zu den erfindungsgemäß verwendeten Organosilanen zählen bevorzugt Verbindungen der allgemeinen Formel I oder II
a) ein Organofunktionelles Silan 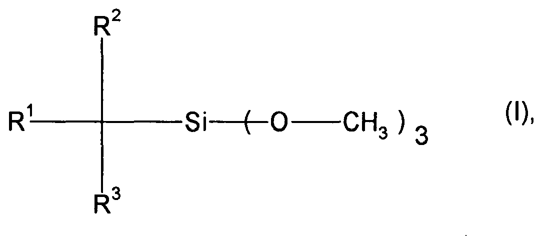 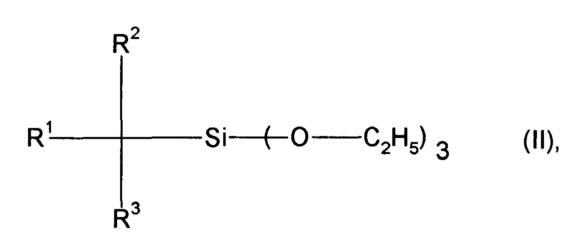
worin R¹ -(CH₂)ₙ-NH-R⁴, -(CH₂)ₙ-NH-[(CH₂)ₘ-NH]ₒ-R⁴, -(CH₂)ₙ-O-R⁵ oder -(CH₂)ₗ-CH=CH₂ bedeutet,
R² Wasserstoff, -(CH₂)ₙ-CH₃ oder R¹ ist,
R³ Wasserstoff, -(CH₂)ₙ-CH₃ oder R² ist,
R⁴ Wasserstoff, -(CH₂)ₙ-CH₃ oder -CO-(CH₂)ₘ-CH₃ bedeutet, und
R⁵ Wasserstoff, -(CH₂-CH₂-O)ₘ-R⁴ oder 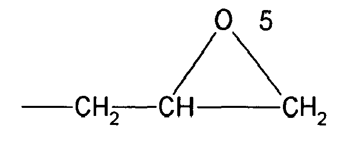 ist,
wobei n und m jeweils unabhängig voneinander eine ganze Zahl zwischen 0 und 12 und o eine ganze Zahl zwischen 0 und 5 ist.

Weitere bevorzugt eingesetzte Silane sind mehrfach funktionelle Silane. Dazu zählen insbesondere Verbindungen, die neben mindestens einer Silangruppe mindestens eine primäre, sekundäre oder tertiäre Aminogruppe oder mindestens eine Epoxidgruppe aufweisen oder mehrfach funktionelle Silane, die mehrere ethylenisch ungesättigte Gruppen im Molekül enthalten.

Besonders bevorzugte Verbindungen aus dieser Gruppe sind Verbindungen der Formeln III, IV, V oder VI

(R⁶-O)₃-Si-(CH₂)ₚ-NH-(CH₂)ₚ-Si-(O-R⁶)₃ (III),

(R⁶-O)₃-Si-(CH₂)ₚ-N[-(CH₂)ₚ-Si-(O-R⁶]₂ (IV),

(R⁶-O)₃-Si-(CH₂)ₚ-O-R⁷ (V),

(R⁶-O)₃-Si-(CH₂)ₚ-NR⁸R⁹ (VI),

worin R⁶ unabhängig voneinander Wasserstoff oder C₁-C₆-Alkyl, vorzugsweise Methyl, Ethyl oder Propyl, bedeutet,
R⁷ ein Glycidylrest (1,2-Epoxypropyl) ist,
R⁸ und R⁹ unabhängig voneinander Wasserstoff oder C₁-C₆-Alkyl bedeuten und
p eine ganze Zahl zwischen 1 und 12 ist.

Besonders bevorzugte Silane der Formeln III und IV sind die Verbindungen:

(CH₃-CH₂-O)₃-Si-(CH₂)ₚ-NH-(CH₂)ₚ-Si-(O-CH₂-CH₃)₃,

(CH₃-O)₃-Si-(CH₂)ₚ-NH-(CH₂)ₚ-Si-(O-CH₃)₃,

(CH₃-CH₂-O)₃-Si-(CH₂)ₚ-N[-(CH₂)ₚ-Si-(O-CH₂-CH₃)₃]₂,

(CH₃-O)₃-Si-(CH₂)ₚ-N[-(CH₂)ₚ-Si-(O-CH₃)₃]₂

worin p die oben definierte Bedeutung besitzt.

Die Silane können als einzelne Verbindungen oder als Mischungen eingesetzt werden.

Als Beispiele für Silanverbindungen der oben genannten Type, die kommerziell erhältlich sind, seien genannt:

Silane des Handelsnamens Dynasylan® (Degussa), der Handelsnamen ADDID® oder Geniosil® (Wacker) oder des Handelsnamens Silquest® (Crompton).

Zu Organosilanen, die in das Polymere eingebaut werden, zählen ethylenisch ungesättigte und Silangruppen enthaltende Monomere der allgemeinen Formel R¹¹Si(CH₃)₀₋₂(OR¹²)₃₋₁ in Frage, wobei R¹¹ die Bedeutung CH₂=CR¹³-(CH₂)₀₋₁ oder CH₂=CR¹³CO₂-(CH₂)₁₋₃ hat, R¹² ein unverzweigter oder verzweigter, gegebenenfalls substituierter Alkylrest mit 1 bis 12 C-Atomen ist, der gegebenenfalls durch eine Ethergruppe unterbrochen sein kann, und R¹³ für Wasserstoff oder Methyl steht.

Bevorzugt sind Silane der Formeln CH₂=CR¹³-(CH₂)₀₋₁Si(CH₃)₀₋₁(OR¹²)₃₋₂ und CH₂=CR¹³CO₂-(CH₂)₃Si(CH₃)₀₋₁(OR¹²)₃₋₂, wobei R¹² ein unverzweigter oder verzweigter, gegebenenfalls substituierter Alkylrest mit 1 bis 12 C-Atomen ist und R¹³ für Wasserstoff oder Methyl steht.

Besonders bevorzugte Silane sind Vinylmethyl-dimethoxy-silan, Vinylmethyl-diethoxy-silan, Vinylmethyl-di-n-propoxy-silan, Vinylmethyl-di-iso-propoxy-silan, Vinylmethyl-di-n-butoxy-silan, Vinylmethyl-di-sec.-butoxy-silan, Vinylmethyl-di-tert.-butoxy-silan, Vinylmethyl-di-(2-methoxyisopropyloxy)-silan und Vinylmethyl-dioctyloxy-silan.

Insbesondere bevorzugt sind Silane der Formel CH₂=CR¹³-(CH₂)₀₋₁Si(OR¹⁴)₃ und CH₂=CR¹³CO₂-(CH₂)₃Si(OR¹⁴)₃, wobei R¹⁴ für einen verzweigten oder unverzweigten Alkylrest mit 1 bis 4 C-Atomen und R¹³ für Wasserstoff oder Methyl steht.

Beispiele hierfür sind γ-(Meth)acryloxypropyl-tris-(2-methoxyethoxy)-silan, γ-(Meth)acryloxypropyl-tris-methoxy-silan, γ-(Meth)acryloxypropyl-tris-ethoxy-silan, γ-(Meth)acryloxypropyl-tris-n-propoxy-silan, γ-(Meth)acryloxypropyl-tris-iso-propoxy-silan, γ-(Meth)acryloxypropyl-tris-butoxy-silan, γ-Acryloxypropyl-tris-(2-methoxyethoxy)-silan, γ-Acryloxypropyl-tris-methoxy-silan, γ-Acryloxypropyl-tris-ethoxy-silan, γ-Acryloxypropyl-tris-n-propoxy-silan, γ-Acryloxypropyl-tris-iso-propoxy-silan, γ-Acryloxypropyl-tris-butoxy-silan, sowie Vinyl-tris-(2-methoxyethoxy)-silan, Vinyl-tris-methoxy-silan, Vinyl-tris-ethoxy-silan, Vinyl-tris-n-propoxy-silan, Vinyl-trisiso-propoxy-silan und Vinyl-tris-butoxy-silan. Die genannten Silanverbindungen können gegebenenfalls auch in Form ihrer (Teil)hydrolysate eingesetzt werden.

Besonders bevorzugt eingesetzte Silane sind primäre und sekundäre Aminoalkylethoxysilane, Bis(3-triethoxysilylpropyl)amin, trifunktionelles Propyltrimethoxysilan [NH₂-(CH₂)₂-NH-(CH₂)₂-NH-(CH₂)₃-Si(OCH₃)₃], Vinyltriethoxysilan [CH₂=CH-Si(OC₂H₅)₃], Vinyltrimethoxysilan [CH₂=CH-Si(OCH₃)₃], 3-Glycidyloxypropyltriethoxysilan, 3-Amino-propyltrimethoxysilan, oligomeres Diaminosilansystem, Glycidyl-trimethoxy funktionelles Silan, Vinyl-triethoxy funktionelles Silan, Glycidyl-triethoxy funktionelles Silan, Vinyltris(2-methoxyethoxy)silan, (3-Glycidoxypropyl)-trimethoxysilan, N-(2-Aminoethyl)(3-aminopropyl)trimethoxy-silan, (3-Aminopropyl)triethoxysilan, N-(2-Aminoethyl)(3-aminopropyl)-methyldimethoxysilan, (3-Aminopropyl)-trimethoxysilan, (Methacryloxymethyl)methyl-dimethoxysilan, (Methacryloxymethyl)trimethoxysilan und/oder (Methacryloxy-methyl)-methyldiethoxysilan.

Das Organosilan liegt im erfindungsgemäß einzusetzenden Klebstoff typischerweise in einer Menge von 0,001 bis 20 Gew. %, bezogen auf den Feststoffgehalt des Klebstoffs, vor. Vorzugsweise wird das Organosilan in einer Menge von 0,001 bis 10 Gew.% eingesetzt.

Silanverbindungen werden bekanntermaßen auch zur Verbesserung der Haftung (Adhäsion) eingesetzt. Eine Verbesserung der Adhäsion führt aber nicht notwendigerweise zu einer Verbesserung der Prägefestigkeit bei der Herstellung von Laminaten.

Zur besseren Verträglichkeit von Polymerdispersion und Silanverbindung kann es notwendig sein, vor der Zugabe des organofunktionellen Silans die Polymerdispersion durch Zusatz von Tensiden oder Schutzkolloid zu stabilisieren.

Die Erfindung betrifft auch ein Verfahren zur Herstellung des oben beschriebenen Laminats umfassend die Maßnahmen:
i) Beschichten mindestens einer saugfähigen Oberfläche eines Substrats mit einem Klebstoff, der eine durch radikalische Emulsionspolymerisation hergestellte Polymerdispersion und ein während der Polymerisation in das Polymere eingebautes und/oder durch Nachgabe zugesetztes Organosilan enthält, das neben mindestens einer Silangruppe mindestens eine primäre, sekundäre oder tertiäre Aminogruppe oder mindestens eine Epoxidgruppe aufweist oder das mindestens eine ethylenisch ungesättigte Gruppe und mindestens eine Silangruppe enthält,
ii) Laminieren einer Folie auf die mit Klebstoff beschichtete Oberfläche in an sich bekannter Weise, und
iii) gegebenenfalls Prägen des Laminats auf der mit der Folie kaschierten Seite.

Die erfindungsgemäßen Laminate können beispielsweise zur Herstellung von Verpackungskartons und anderen Packmaterialien, Buchrücken, Broschüren, Werbemitteln, Postkarten, Schulungstafeln sowie Ausweiskarten und Chipkarten eingesetzt werden. Diese Verwendungen sind ebenfalls Gegenstand der vorliegenden Erfindung.

Noch ein weiterer Gegenstand der vorliegenden Erfindung ist die Verwendung von Klebstoffen enthaltend eine durch radikalische Emulsionspolymerisation hergestellte Polymerdispersion und ein Organosilan für die Verklebung von Kunststofffolien mit porösen Substraten und für die Glanzfolienkaschierung.

Die nachfolgenden Beispiele erläutern die Erfindung ohne diese zu begrenzen.

### Beispiel 1:

Zu einer wässrigen Dispersion eines Acrylat-Copolymeren auf der Basis von Methylmethacrylat und 2-Ethylhexylacrylat mit der Glasübergangstemperatur T_{g} von -18°C wurden 0,5% eines Emulgators (Emulsogen EPN 287) und 0,5 % eines Aminosilans (N-(2-Aminoethyl)(3-aminopropyl)trimethoxysilan) zugemischt. Die Ausgangsdispersion und die Mischung wurden jeweils nach Verdünnung mit Wasser auf eine Viskosität von ca. 100 mPa*s (Brookfield RVT, Spindel 1/20 Upm, 23°C) eingestellt und zur Kaschierung einer OPP-Folie (20 µm stark, einseitig Corona-vorbehandelt, Trespaphan NND 20) auf einem tiefschwarz bedruckten Papier (100 g/m²) eingesetzt.

Die Kaschierung wurde auf einer Kaschieranlage durchgeführt, bei welcher der Klebstoff mittels Luftbürste auf die vorbehandelte Seite der OPP-Folie aufgetragen wurde. Nach dem Klebstoffauftrag durchfuhr die Folie einen Trockenkanal der bei einer Temperatur von 60-70 °C betrieben wurde. Die Kaschierung von Folie und Druckträger erfolgte wärmeaktiviert nach Durchlaufen des Trockenkanals zwischen einer Silikonwalze und einer auf 80 °C geheizten Walze.

An einem Teil der kaschierten Muster wurden die Schälfestigkeit und die Wärmestandfestigkeit bei 80 °C im direkten Vergleich gemessen. Die Ergebnisse für die Schälfestigkeit wurden für verschiedene Abzugsgeschwindigkeiten als Mittelwerte aus jeweils drei Messungen in N/2,5 cm angegeben. Die Ergebnisse für die Wärmestandfestigkeit als Zeitdauer nach der bei 80 °C an einer 2,5 cm breiten Probe bei einer Belastung von 100 g bzw. von 200 g eine Abschälstrecke von 5 cm erreicht wurde. Angegeben wurde auch hier der Mittelwert von 3 Einzelmessungen. Ein zweiter Teil der kaschierten Muster wurde 24 h nach der Kaschierung in einer Rollenprägeanlage einer Prägeversuch (Leinenstruktur) unterzogen, wobei der Druck so hoch eingestellt wurde, daß man gerade eben keine Auffaserung des Papier an den Prägekanten erhielt. Beurteilt wurde, ob 24 h nach der Prägung Delaminationserscheinungen, z.B. durch Graufärbung, sichtbar waren. Diese Versuche wurden immer im direkten Vergleich durchgeführt.

**Tabelle 1: Ergebnisse der Kaschierversuche**

| Eingesetzter Kaschierklebstoff | Auftrags -menge Klebstoff (g/m²) | Schälfestigkeit der Laminate in N/2,5 cm bei einer Abzugsgeschwindigkeit von | | | | | Wärmestand bei 80°C in min | | Beurteilung Prägung |
|---|---|---|---|---|---|---|---|---|---|
| | | 5 cm/min | 10 cm/min | 20 cm/min | 40 cm/min | 60 cm/min | 100 g/2,5 cm | 200 g/2,5 cm | |
| ohne Silan | 9,4 | 2,1 | 2,2 | 2,4 | 2,8 | 2,9 | 1:47 | 0:11 | Deutliche Delamination |
| mit Silan | 8,3 | 2,4 | 2,4 | 2,7 | 2,9 | 3,2 | 2:27 | 0:19 | Geringe Delamination |

### Beispiel 2:

Zu einer wässrigen Dispersion eines Acrylat-Copolymeren auf der Basis von Methylmethacrylat und 2-Ethylhexylacrylat mit der Glasübergangstemperatur T_{g} von -18°C wurden 1 % eines Epoxysilans (Gamma-Glycidoxypropyl-trimethoxysilan) zugemischt. Die Ausgangsdispersion und die Mischung wurden jeweils nach Verdünnung mit Wasser auf eine Viskosität von ca. 100 mPa*s (Brookfield RVT, Spindel 1/20 Upm, 23 °C) eingestellt und zur Kaschierung einer OPP-Folie (20 µm stark, einseitig Corona-vorbehandelt, Trespaphan NND 20) auf einem tiefschwarz bedruckten Papier (100 g/m²) eingesetzt.

Die Kaschierung und die Messung der Eigenschaften der kaschierten Muster wurden analog zu Beispiel 1 durchgeführt. Die Ergebnisse sind in Tabelle 2 zusammengefasst.

**Tabelle 2: Ergebnisse der Kaschierversuche**

| Eingesetzter Kaschierklebstoff | Auftrags -menge Klebstoff (g/m²) | Schälfestigkeit der Laminate in N/2,5 cm bei einer Abzugsgeschwindigkeit von | | | | | Wärmestand bei 80°C in min | | Beurteilung Prägung |
|---|---|---|---|---|---|---|---|---|---|
| | | 5 cm/min | 10 cm/min | 20 cm/min | 40 cm/min | 60 cm/min | 100 g/2,5 cm | 200 g/2,5 cm | |
| ohne Silan | 9,4 | 2,1 | 2,2 | 2,4 | 2,8 | 2,9 | 1:47 | 0:11 | Deutliche Delamination |
| mit Silan | 10,2 | 2,7 | 2,6 | 2,7 | 2,9 | 3,1 | 3:24 | 0:38 | Prakt. Keine Delamination |

### Beispiel 3:

Zu einer wässrigen Dispersion eines Acrylat-Copolymeren auf der Basis von Methylmethacrylat und Butylacrylat mit der Glasübergangstemperatur T_{g} von -20°C wurden 0,5 % eines Epoxysilans (Gamma-Glycidoxypropyl-trimethoxysilan) zugemischt. Die Ausgangsdispersion und die Mischung wurden jeweils nach Verdünnung mit Wasser auf eine Viskosität von ca. 100 mPa* s (Brookfield RVT, Spindel 1/20 Uprn, 23 °C) eingestellt und zur Kaschierung einer OPP-Folie (20 µm stark, einseitig Corona-vorbehandelt, Trespaphan NND 20) auf einem tiefschwarz bedruckten Papier (100 g/m²) eingesetzt.

Die Kaschierung und die Messung der Eigenschaften der kaschierten Muster wurden analog zu Beispiel 1 durchgeführt. Die Ergebnisse sind in Tabelle 3 zusammengefasst.

**Tabelle 3: Ergebnisse der Kaschierversuche**

| Eingesetzter Kaschierklebstoff | Auftrags -menge Klebstoff (g/m²) | Schälfestigkeit der Laminate in N/2,5 cm bei einer Abzugsgeschwindigkeit von | | | | | Wärmestand bei 80°C in min | | Beurteilung Prägung |
|---|---|---|---|---|---|---|---|---|---|
| | | 5 cm/min | 10 cm/min | 20 cm/min | 40 cm/min | 60 cm/min | 100 g/2,5 cm | 200 g/2,5 cm | |
| ohne Silan | 10,2 | 3,7 | 3,5 | 3,7 | 4,3 | 4,6 | 20:34 | 1:08 | Sichtbare Delamination |
| mit Silan | 10,3 | 3,3 | 3,3 | 3,3 | 4,2 | 4,0 | 4:14 | 0:24 | Keine Delamination |

### Beispiel 4:

Zu einer wässrigen Dispersion eines Acrylat-Copolymeren auf der Basis von Methylmethacrylat und Butylacrylat (Acronal® A 310) wurden 1 % eines Epoxysilans (Gamma-Glycidoxypropyl-trimethoxysilan) zugemischt. Die Ausgangsdispersion und die Mischung wurden jeweils nach Verdünnung mit Wasser auf eine Viskosität von ca. 100 mPa*s (Brookfield RVT, Spindel1/20 Upm, 23 °C) eingestellt und zur Kaschierung einer OPP-Folie (20 µm stark, einseitig Corona-vorbehandelt, Trespaphan NND 20) auf einem tiefschwarz bedruckten Papier (100 g/m²) eingesetzt.

Die Kaschierung und die Messung der Eigenschaften der kaschierten Muster wurden analog zu Beispiel 1 durchgeführt. Die Ergebnisse sind in Tabelle 4 zusammengefasst.

**Tabelle 4: Ergebnisse der Kaschierversuche**

| Eingesetzter Kaschierklebstoff | Auftrags -menge Klebstoff (g/m²) | Schälfestigkeit der Laminate in N/2,5 cm bei einer Abzugsgeschwindigkeit von | | | | | Wärmestand bei 80°C in min | | Beurteilung Prägung |
|---|---|---|---|---|---|---|---|---|---|
| | | 5 cm/min | 10 cm/min | 20 cm/min | 40 cm/min | 60 cm/min | 100 g/2,5 cm | 200 g/2,5 cm | |
| ohne Silan | 10,4 | 4,6 | 4,6 | 4,9 | 5,5 | 6,3 | 15:22 | 1:42 | Sichtbare Delamination |
| mit Silan | 10,3 | 3,5 | 3,5 | 3,4 | 4,2 | 4,6 | 8:00 | 1:09 | Keine Delamination |

### Beispiel 5:

Zu einer anionisch stabilisierten feinteiligen Copolymerdispersion mit 25% Methylmethacrylat und 75% Butylacrylat als Hauptmonomeren (Feststoffgehalt: 50,5%, pH: 8,2, Tg: -21 °C, Partikelgrößenverteilung: Mastersizer, multimodale Mie-Auswertung: dₙ = 220 nm, d_{w} = 260 nm) wurden 1 % Aminosilan (N-(2-Aminoethyl)(3-aminopropyl)trimethoxysilan) zugesetzt. Die Ausgangsdispersion und die Mischung wurden jeweils nach Verdünnung mit Wasser auf eine Viskosität von ca. 100 mPa*s (Brookfield RVT, Spindel 1/20 Upm, 23 °C) eingestellt und zur Kaschierung einer OPP-Folie (20 µm stark, einseitig Corona-vorbehandelt, Trespaphan NND 20) auf einem tiefschwarz bedruckten Papier (100 g/m²) eingesetzt.

Die Kaschierung und die Messung der Eigenschaften der kaschierten Muster wurden analog zu Beispiel 1 durchgeführt. Die Ergebnisse sind in Tabelle 5 zusammengefasst.

**Tabelle 5: Ergebnisse der Kaschierversuche**

| Eingesetzter Kaschierklebstoff | Auftrags -menge Klebstoff (g/m²) | Schälfestigkeit der Laminate in N/2,5 cm bei einer Abzugsgeschwindigkeit von | | | | | Wärmestand bei 80°C in min | | Beurteilung Prägung |
|---|---|---|---|---|---|---|---|---|---|
| | | 5 cm/min | 10 cm/min | 20 cm/min | 40 cm/min | 60 cm/min | 100 g/2,5 cm | 200 g/2,5 cm | |
| ohne Silan | 9,5 | 2,4 | 2,5 | 2,7 | 3,0 | 3,2 | 1:35 | 0:10 | Deutliche Delamination |
| mit Silan | 10,2 | 3,0 | 2,6 | 2,7 | 3,2 | 3,6 | 5:35 | 0:17 | Prakt. Keine Delamination |

### Beispiel 6:

Zu einer anionisch stabilisierten feinteiligen Copolymerdispersion mit 30% Methylmethacrylat und 70% 2-Ethylhexylacrylat als Hauptmonomeren (Feststoffgehalt: 52,3%, pH: 8,0, T_{g}: -18 °C, Partikelgrößenverteilung: Mastersizer, multimodale Mie-Auswertung: dₙ = 190 nm, d_{w} = 200 nm) wurden 1 % Epoxysilan (Gamma-Glycidoxypropyltrimethoxysilan) zugesetzt. Die Ausgangsdispersion und die Mischung wurden jeweils nach Verdünnung mit Wasser auf eine Viskosität von ca. 100 mPa*s (Brookfield RVT, Spindel 1/20 Upm, 23 °C) eingestellt und zur Kaschierung einer OPP-Folie (20 µm stark, einseitig Corona-vorbehandelt, Trespaphan NND 20) auf einem tiefschwarz bedruckten Papier (100 g/m²) eingesetzt.

Die Kaschierung und die Messung der Eigenschaften der kaschierten Muster wurden analog zu Beispiel 1 durchgeführt. Die Ergebnisse sind in Tabelle 6 zusammengefasst.

**Tabelle 6: Ergebnisse der Kaschierversuche**

| Eingesetzter Kaschierklebstoff | Auftrags -menge Klebstoff (g/m²) | Schälfestigkeit der Laminate in N/2,5 cm bei einer Abzugsgeschwindigkeit von | | | | | Wärmestand bei 80°C in min | | Beurteilung Prägung |
|---|---|---|---|---|---|---|---|---|---|
| | | 5 cm/min | 10 cm/min | 20 cm/min | 40 cm/min | 60 cm/min | 100 g/2,5 cm | 200 g/2,5 cm | |
| ohne Silan | 10,7 | 2,9 | 3,1 | 3,4 | 3,7 | 3,9 | 18:38 | 1:00 | Sichtbare Delamination |
| mit Silan | 9,5 | 3,3 | 3,2 | 4,1 | 3,4 | 3,9 | 3:51 | 0:29 | Keine Delamination |

## Patentansprüche

1. Prägbares Laminat umfassend
a) ein flächiges Substrat mit mindestens einer saugfähigen Oberfläche,
b) eine Folie, die
c) mit dem Substrat durch einen Klebstoff verbunden ist, der eine durch radikalische Emulsionspolymerisation hergestellte Polymerdispersion und ein während der Polymerisation in das Polymere eingebautes und/oder durch Nachgabe zugesetztes Organosilan enthält, das neben mindestens einer Silangruppe mindestens eine primäre, sekundäre oder tertiäre Aminogruppe oder mindestens eine Epoxidgruppe aufweist oder das mindestens eine ethylenisch ungesättigt Gruppen und mindestens eine Silangruppe enthält.

2. Laminat nach Anspruch 1, **dadurch gekennzeichnet, daß** das Substrat ausgewählt wird aus der Gruppe bestehend aus Papieren, Pappen, Kartons und anderen Faservliesen.

3. Laminat nach Anspruch 2, **dadurch gekennzeichnet, daß** das Substrat bedruckt und/oder beschichtet ist.

4. Laminat nach Anspruch 1, **dadurch gekennzeichnet, daß** die Folie ausgewählt wird aus der Gruppe der Metallfolien oder der Kunststofffolien.

5. Laminat nach Anspruch 4, **dadurch gekennzeichnet, daß** das Substrat bedruckt ist und daß die Kunststofffolie lichtdurchlässig ist.

6. Laminat nach Anspruch 1, **dadurch gekennzeichnet, daß** die durch radikalische Emulsionspolymerisation hergestellte Polymerdispersion ein Polyacrylat oder ein Polyvinylester ist, vorzugsweise ein Polyacrylat oder ein Polyvinylester mit einer Glasübergangstemperatur unterhalb von 15 °C.

7. Laminat nach Anspruch 1, **dadurch gekennzeichnet, daß** die durch radikalische Emulsionspolymerisation hergestellte Polymerdispersion sich ableitet von den Hauptmonomeren Vinylacetat/Butylacrylat, Vinylacetat/Dibutylmaleinat, Vinylacetat/Dibutylfumarat, Vinylacetat/2-Ethylhexylacrylat, Vinylacetat/Ethen/-Butylacrylat, Vinylacetat/Ethen/Dibutylmaleinat, Vinylacetat/Ethen/Dibutylfumarat, Vinylacetat/Ethen/2-Ethylhexylacrylat, Methylmethacrylat/Butylacrylat, Methylmethacrylat/2-Ethylhexylacrylat, Styrol/Butylacrylat, Styrol/2-Ethylhexylacrylat, Methylmethacrylat/Isobutylacrylat oder Methylmethacrylat/Isopropylacrylat.

8. Laminat nach Anspruch 1, **dadurch gekennzeichnet, daß** die durch radikalische Emulsionspolymerisation hergestellte Polymerdispersion sich ableitet von den Hauptmonomeren Vinylacetat/Vinylchlorid/Ethen, Vinylacetat/Vinyllaurat/Ethen, Vinylacetat/Vinyllaurat/Ethen/Vinylchlorid, Vinylacetat/Versaticsäurevinylester/-EthenNinylchlorid, Versaticsäurevinylester/EthenNinylchlorid, Vinylacetat/-Versaticsäurevinylester/Ethen und Vinylacetat/Ethen, wobei die Kombination Vinylacetat/Ethen besonders bevorzugt ist.

9. Laminat nach Anspruch 1, **dadurch gekennzeichnet, daß** das Organosilan eine Verbindung der allgemeinen Formel I oder II ist 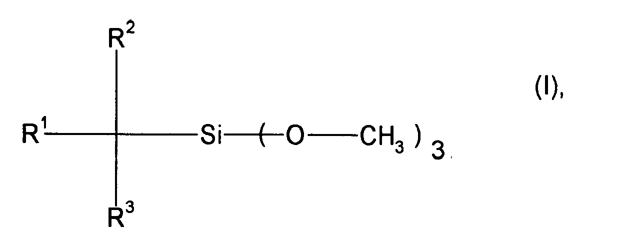 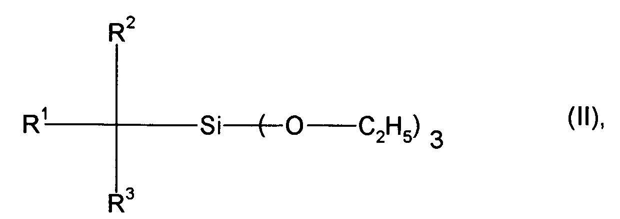 worin R¹ -(CH₂)ₙ-NH-R⁴, -(CH₂)ₙ-NH-[(CH₂)ₘ-NH]ₒ-R⁴, -(CH₂)ₙ-O-R⁵ oder
-(CH₂)ₗ-CH=CH₂ bedeutet,
R² Wasserstoff, -(CH₂)ₙ-CH₃ oder R¹ ist,
R³ Wasserstoff, -(CH₂)ₙ-CH₃ oder R² ist,
R⁴ Wasserstoff, -(CH₂)ₙ-CH₃ oder -CO-(CH₂)ₘ-CH₃ bedeutet, und
R⁵ Wasserstoff, -(CH₂-CH₂-O)ₘ-R⁴ oder 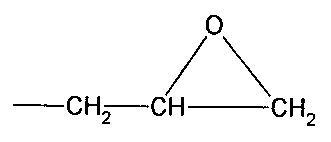 ist,
wobei n und m jeweils unabhängig voneinander eine ganze Zahl zwischen 0 und 12 und o eine ganze Zahl zwischen 0 und 5 ist.

10. Laminat nach Anspruch 1, **dadurch gekennzeichnet, daß** das Organosilan eine Verbindung ist, die neben mindestens einer Silangruppe mindestens eine primäre, sekundäre oder tertiäre Aminogruppe oder mindestens eine Epoxidgruppe aufweist.

11. Laminat nach Anspruch 10, **dadurch gekennzeichnet, daß** das Organosilan eine Verbindung der allgemeinen Formel III, IV, V oder VI ist
(R⁶-O)₃-Si-(CH₂)ₚ-NH-(CH₂)ₚ-Si-(O-R⁶)₃ (III),
(R ⁶-O)₃-Si-(CH₂)ₚ-N[-(CH₂)ₚ-Si-(O-R⁶]₂ (IV),
(R⁶-O)₃-Si-(CH₂)ₚ-O-R⁷ (V),
(R⁶-O)₃-Si-(CH₂)_{P}-NR⁸R⁹ (VI),
worin R⁶ unabhängig voneinander Wasserstoff oder C₁-C₆-Alkyl, vorzugsweise Methyl, Ethyl oder Propyl, bedeutet,
R⁷ ein Glycidylrest (1,2-Epoxypropyl) ist,
R⁸ und R⁹ unabhängig voneinander Wasserstoff oder C₁-C₆-Alkyl bedeuten und
p eine ganze Zahl zwischen 1 und 12 ist.

12. Laminat nach Anspruch 11, **dadurch gekennzeichnet, daß** das Organosilan eine Verbindung der Formeln
(CH₃-CH₂-O)₃-Si-(CH₂)ₚ-NH-(CH₂)ₚ-Si-(O-CH₂-CH₃)₃,
(CH₃-O)₃-Si-(CH₂)ₚ-NH-(CH₂)ₚ-Si-(O-CH₃)₃,
(CH₃-CH₂-O)₃-Si-(CH₂)ₚ-N[-(CH₂)ₚ-Si-(O-CH₂-CH₃)₃]₂ und/oder
(CH₃-O)₃-Si-(CH₂)ₚ-N[-(CH₂)ₚ-Si-(O-CH₃)₃]₂
ist, worin p die in Anspruch 11 definierte Bedeutung besitzt.

13. Laminat nach Anspruch 1, **dadurch gekennzeichnet, daß** das Organosilan eine ethylenisch ungesättigte und Silangruppen enthaltende Verbindung der allgemeinen Formel R¹¹Si(CH₃)₀₋₂(OR¹²)₃₋₁ ist, wobei R¹¹ die Bedeutung CH₂=CR¹³-(CH₂)₀₋₁ oder CH₂=CR¹³CO₂-(CH₂)₁₋₃ hat, R¹² ein unverzweigter oder verzweigter, gegebenenfalls substituierter Alkylrest mit 1 bis 12 C-Atomen ist, der gegebenenfalls durch eine Ethergruppe unterbrochen sein kann, und R¹³ für Wasserstoff oder Methyl steht.

14. Laminat nach Anspruch 1, **dadurch gekennzeichnet, daß** das Organosilan eine ethylenisch ungesättigte und Silangruppen enthaltende Verbindung der allgemeinen Formeln CH₂=CR¹³-(CH₂)₀₋₁Si(CH₃)₀₋₁(OR¹²)₃₋₂ und CH₂=CR¹³CO₂₋(CH₂)₃Si(CH₃)₀₋₁(OR¹²)₃₋₂ ist, wobei R¹² ein unverzweigter oder verzweigter, gegebenenfalls substituierter Alkylrest mit 1 bis 12 C-Atomen ist und R¹³ für Wasserstoff oder Methyl steht.

15. Laminat nach Anspruch 14, **dadurch gekennzeichnet, daß** das Organosilan eine Verbindung ist, die ausgewählt wird aus der Gruppe bestehend aus Vinylmethyl-dimethoxy-silan, Vinylmethyl-diethoxy-silan, Vinylmethyl-di-n-propoxy-silan, Vinylmethyl-di-iso-propoxy-silan, Vinylmethyl-di-n-butoxy-silan, Vinylmethyl-disec.-butoxy-silan, Vinylmethyl-di-tert.-butoxy-silan, Vinylmethyl-di-(2-methoxyisopropyloxy)-silan und/oder Vinylmethyl-dioctyloxy-silan.

16. Laminat nach Anspruch 14, **dadurch gekennzeichnet, daß** das Organosilan eine Verbindung der Formel CH₂=CR¹³-(CH₂)₀₋₁Si(OR¹⁴)₃ und CH₂=CR²CO₂₋(CH₂)₃Si(OR¹⁴)₃ ist wobei R¹⁴ für einen verzweigten oder unverzweigten Alkylrest mit 1 bis 4 C-Atomen und R¹³ für Wasserstoff oder Methyl steht.

17. Laminat nach Anspruch 16, **dadurch gekennzeichnet, daß** das Organosilan eine Verbindung ist, die ausgewählt wird aus der Gruppe bestehend aus γ-(Meth)acryloxypropyl-tris-(2-methoxyethoxy)-silan, γ-(Meth)acryloxypropyl-tris-methoxy-silan, γ-(Meth)acryloxypropyl-tris-ethoxy-silan, γ-(Meth)acryloxypropyltris-n-propoxy-silan, γ-(Meth)acryloxypropyl-tris-iso-propoxy-silan, γ-(Meth)acryloxypropyl-tris-butoxy-silan, γ-Acryloxypropyl-tris-(2-methoxyethoxy)-silan, γ-Acryloxypropyl-tris-methoxy-silan, γ-Acryloxypropyl-tris-ethoxy-silan, γ-Acryloxypropyl-tris-n-propoxy-silan, γ-Acryloxypropyl-tris-iso-propoxy-silan, γ-Acryloxypropyl-tris-butoxy-silan, sowie Vinyl-tris-(2-methoxyethoxy)-silan, Vinyl-tris-methoxy-silan, Vinyl-tris-ethoxy-silan, Vinyl-tris-n-propoxy-silan, Vinyl-trisiso-propoxy-silan und/oder Vinyl-tris-butoxy-silan.

18. Laminat nach Anspruch 1, **dadurch gekennzeichnet, daß** das Organosilan eine Verbindung ist, die ausgewählt wird aus der Gruppe bestehend aus primären und sekundären Aminoalkylethoxysilanen, Bis(3-triethoxysilylpropyl)amin, trifunktionellem Propyltrimethoxysilan [NH₂-(CH₂)₂-NH-(CH₂)₂-NH-(CH₂)₃₋Si(OCH₃)₃], Vinyltriethoxysilan [CH₂=CH-Si(OC₂H₅)₃], Vinyltrimethoxysilan [CH₂=CH-Si(OCH₃)₃], 3-Glycidyloxypropyltriethoxysilan, 3-Aminopropyltrimethoxysilan, oligomerem Diaminosilansystem, Glycidyl-trimethoxy funktionellem Silan, Vinyl-triethoxy funktionellem Silan, Glycidyl-triethoxy funktionellem Silan, Vinyltris(2-methoxyethoxy)silan, (3-Glycidoxypropyl)-trimethoxysilan, N-(2-Aminoethyl)(3-aminopropyl)tri-methoxysilan, (3-Aminopropyl)triethoxysilan, N-(2-Aminoethyl)(3-aminopropyl)-methyldimethoxysilan, (3-Aminopropyl)-trimethoxysilan, (Methacryloxymethyl)-methyl-dimethoxysilan, (Methacryloxy-methyl)trimethoxysilan und/oder (Methacryloxymethyl)methyldiethoxysilan.

19. Laminat nach Anspruch 1, **dadurch gekennzeichnet, daß** dieses auf der Seite der Folie eine Prägung aufweist.

20. Verfahren zur Herstellung des Laminats nach Anspruch 1 umfassend die Maßnahmen:
i) Beschichten mindestens einer saugfähigen Oberfläche eines Substrats mit einem Klebstoff, der eine durch radikalische Emulsionspolymerisation hergestellte Polymerdispersion und ein während der Polymerisation in das Polymere eingebautes und/oder durch Nachgabe zugesetztes Organosilan enthält, das neben mindestens einer Silangruppe mindestens eine primäre, sekundäre oder tertiäre Aminogruppe oder mindestens eine Epoxidgruppe aufweist oder das mindestens eine ethylenisch ungesättigte Gruppen und mindestens eine Silangruppen enthält.
ii) Laminieren einer Folie auf die mit Klebstoff beschichtete Oberfläche in an sich bekannter Weise, und
iii) gegebenenfalls Prägen des Laminats auf der mit der Folie kaschierten Seite.

21. Verwendung der Laminate nach Anspruch 1 zur Herstellung von Verpackungskartons, anderen Packmaterialien, Buchrücken, Broschüren, Werbemitteln, Postkarten, Schulungstafeln, Ausweiskarten und Chipkarten.

22. Verwendung von Klebstoffen enthaltend eine durch radikalische Emulsionspolymerisation hergestellte Polymerdispersion und ein während der Polymerisation in das Polymere eingebautes und/oder durch Nachgabe zugesetztes Organosilan, das neben mindestens einer Silangruppe mindestens eine primäre, sekundäre oder tertiäre Aminogruppe oder mindestens eine Epoxidgruppe aufweist oder das mindestens eine ethylenisch ungesättigte Gruppe und mindestens eine Silangruppe enthält, für die Verklebung von Kunststofffolien mit porösen Substraten und für die Glanzfolienkaschierung.
